# EUROPEAN PATENT APPLICATION

(11) **EP 4 300 892 A1**
(43) Date of publication of application: **03.01.2024**
(21) Application number: 22783885.1
(22) Date of filing: 24.03.2022
(51) Int. Cl.: H04L 12/00, G06F 9/50

(54) **RESOURCE SCHEDULING METHOD AND APPARATUS, COMPUTER DEVICE, SYSTEM, AND STORAGE MEDIUM**

(30) Priority: 07.04.2021 CN 202110371846; 23.04.2021 CN 202110444582
(71) Applicant: Huawei Cloud Computing Technologies Co., Ltd., Guizhou 550025 (CN)
(72) Inventor: WANG, Nannan, Shenzhen, Guangdong 518129 (CN)
(74) Representative: Isarpatent
(86) International application number: PCT/CN2022/082881
(87) International publication number: WO 2022/213818

(57) **Abstract**

This application provides a resource scheduling method. A resource scheduling apparatus receives a first resource reservation request and a second resource reservation request, and reserves a first elastic resource for a first tenant and a second resource for a second tenant in a cloud infrastructure. The resource scheduling apparatus receives a resource allocation request requesting to allocate a resource to the first tenant, and when determining that a quantity of resources requested by the resource allocation request is greater than a quantity of first elastic resources reserved by the resource scheduling apparatus for the first tenant in advance, allocates a resource to the first tenant from the second elastic resource. In this way, more resources are allocated to the first tenant, meeting service quality required by an SLA signed by the first tenant. In addition, the elastic resource of the second tenant may be used by the first tenant to provide a business service for the first tenant, improving resource utilization.

## Description

This application claims priority to Chinese Patent Application No. 202110371846.6, filed with the China National Intellectual Property Administration on April 7, 2021 and entitled "RESOURCE ELASTIC MANAGEMENT SYSTEM", and to Chinese Patent Application No. 202110444582.2, filed with the China National Intellectual Property Administration on April 23, 2021 and entitled "RESOURCE SCHEDULING METHOD AND APPARATUS, COMPUTER DEVICE, SYSTEM, AND STORAGE MEDIUM", both of which are incorporated herein by reference in their entireties.

### TECHNICAL FIELD

This application relates to the field of communication technologies, and in particular, to a resource scheduling method and apparatus, a computer device, a system, and a storage medium.

### BACKGROUND

In an actual scenario, a quantity of resources required by an internet tenant may be different in different time periods. For example, when a hot event (for example, a network hot event that the tenant pays attention to) happens, because the internet tenant collects information such as a video and news about the hot event on a network, a resource required by the internet tenant increases sharply. For example, the quantity of the resources required by the internet tenant may be 5 to 10 times (or even higher) of that in another time period.

Currently, to ensure a service-level agreement (service-level agreement, SLA) signed by the internet tenant, a large quantity of resources are usually reserved for the internet tenant, to meet a burst requirement of the internet tenant for a high resource quantity. The SLA specifies quality of a business service provided by a service provider (for example, an operator) for the tenant.

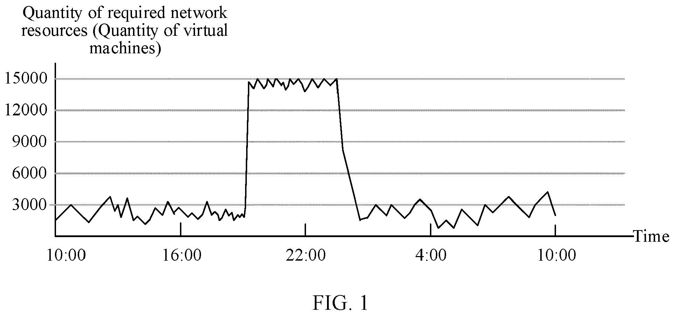

However, the burst requirement for the high resource quantity is usually a low-probability event. As shown in FIG. 1, a quantity of resources required by an internet tenant may be large in only four hours in one day, and the quantity of the required resources is low in the remaining 20 hours. In this case, the large quantity of resources reserved for the internet tenant may be in an idle state for long time, and consequently, resource utilization is at a low level.

### SUMMARY

This application provides a resource scheduling method, to improve resource utilization while ensuring an SLA commitment corresponding to an internet tenant. In addition, this application further provides a resource scheduling apparatus, a computer device, a system, a computer-readable storage medium, and a computer program product.

According to a first aspect, this application provides a resource scheduling method. The resource scheduling method may be performed by a corresponding resource scheduling apparatus. The resource scheduling apparatus receives a first resource reservation request and a second resource reservation request, reserves a first elastic resource for a first tenant in a cloud infrastructure based on the first resource reservation request, and reserves a second elastic resource for a second tenant in the cloud infrastructure based on the second resource reservation request. When a service volume of the first tenant increases, the resource scheduling apparatus may receive a resource allocation request sent by the first tenant. The resource allocation request requests the resource scheduling apparatus to allocate a resource, for example, any one or more of a computing resource, a storage resource, and a network resource, to the first tenant in the cloud infrastructure. In addition, when it is determined that a quantity of resources requested by the resource allocation request is greater than a quantity of first elastic resources that are reserved by the resource scheduling apparatus for the first tenant in advance, the resource scheduling apparatus allocates a resource to the first tenant from the second elastic resource.

When the service volume of the first tenant increases, and the resource allocated to the first tenant does not meet a current resource requirement, the resource scheduling apparatus schedules the resource to the first tenant from the second elastic resource of the second tenant (including one or more tenants). Therefore, on one hand, more resources are allocated to the first tenant to better meet an SLA signed by the first tenant, and on the other hand, the second elastic resource can be used by the first tenant to implement a service of the first tenant, so as to reuse the elastic resource. In this way, resource utilization can also be improved while an SLA commitment corresponding to the first tenant is met.

In a possible implementation, the resource allocation request includes a resource running time period. Therefore, when allocating the resource to the first tenant from the second elastic resource, the resource scheduling apparatus may specifically allocate the resource to the first tenant from a part that is of the second elastic resource and that is not required by the second tenant in the resource running time period. In other words, the resource allocated to the first tenant is not used by the second tenant in the resource running time period, and may be used by the first tenant after being allocated to the first tenant. Then, after the resource running time period ends, the resource scheduling apparatus may release the resource allocated to the first tenant from the second elastic resource back to the second elastic resource. In this way, the resource that is in the second elastic resource and that is not used by the second tenant in the resource running time period may be used by the first tenant, to improve utilization of the part of the resource.

In a possible implementation, when a resource quantity of the resources allocated to the first tenant still does not meet a quantity of resources requested by the first tenant, the resource scheduling apparatus may reclaim a deletable instance used by a third tenant, for example, a spot instance and/or an offline computing instance. The third tenant has confirmed that the deletable instance is allowed to be reclaimed during running, and schedules, to the first tenant, a resource obtained by reclaiming the deletable instance. In this way, by reclaiming a deletable instance of another tenant, the quantity of the resources allocated to the first tenant can be further increased, thereby further ensuring service quality required by the SLA signed by the first tenant.

In a possible implementation, the resource allocation request includes an instance specification. In this case, the resource scheduling apparatus may further reclaim a replaceable instance used by a fourth tenant. A specification of the replaceable instance is the instance specification carried in the resource allocation request, and the fourth tenant has confirmed that the replaceable instance is allowed to be replaced during running. Then, the resource scheduling apparatus may schedule, to the first tenant, a resource obtained by reclaiming the replaceable instance, and allocate an instance of another specification to the fourth tenant to replace the replaceable instance. In this way, an instance being used by another tenant may be replaced with an instance of another specification in an instance replacement manner, and the replaced instance of the specification may be allocated to the first tenant, to meet a resource requirement of the first tenant for the instance of the specification.

In a possible implementation, a price at which the fourth tenant purchases the replaceable instance is lower than a price at which the fourth tenant purchases a non-replaceable instance. The non-replaceable instance and the replaceable instance have a same specification, but the non-replaceable instance is not allowed to be replaced during running. In this case, the replaceable instance purchased by the fourth tenant may be reclaimed for compensation in a commercial incentive manner, to improve flexibility of resource scheduling.

In a possible implementation, the resource allocation request includes an identifier of a target region of the cloud infrastructure. In this case, the resource scheduling apparatus may reclaim a migratable instance used by a fifth tenant. The migratable instance belongs to the target region, in other words, the migratable instance is run in the target region, and the fifth tenant has confirmed that the migratable instance is allowed to be migrated during running. Specifically, the migratable instance may be migrated to another region. Then, the resource scheduling apparatus may schedule, to the first tenant, a resource obtained by reclaiming the migratable instance, and migrate the migratable instance of the fifth tenant to another region. In this way, an instance being used by another tenant may be migrated to another region in an instance migration manner, and the migratable instance may be allocated to the first tenant, to meet a resource requirement of the first tenant for an instance that belongs to the target region.

In a possible implementation, a price at which the fifth tenant purchases the migratable instance is lower than a price at which the fifth tenant purchases a non-migratable instance. The non-migratable instance and the migratable instance belong to a same region, but the non-migratable instance is not allowed to be migrated during running. In this case, the migratable instance purchased by the fifth tenant may be reclaimed for compensation in a commercial incentive manner, to improve the flexibility of resource scheduling.

In a possible implementation, the resource allocation request includes identifiers of a first region and a second region in the cloud infrastructure. A priority of allocating a resource in the first region to the first tenant is higher than a priority of allocating a resource in the second region to the first tenant. In this case, the resource scheduling apparatus determines that a quantity of resources that are in the first region and that can be allocated to the first tenant is less than the quantity of the resources requested by the resource allocation request, and allocates the resource in the second region to the first tenant. In this way, a resource in another region may be scheduled to the first tenant, to meet the resource requirement of the first tenant.

In a possible implementation, the resource scheduling apparatus implements different services of the first tenant based on resource configuration of the first tenant for a service and separately by using the resource in the first region in the cloud infrastructure and the resource in the second region in the cloud infrastructure. In this way, for different services of the first tenant, the first tenant may determine resources in which regions are used to implement the services, so that the first tenant deploys resources for implementing the services.

In a possible implementation, the resource scheduling apparatus may present a resource allocation prompt interface. The resource allocation prompt interface displays a resource in a third region in the cloud infrastructure. In this way, when the first tenant determines to use the resource in the third region to implement a service, the resource scheduling apparatus may, in response to a resource allocation confirmation operation of the first tenant for the third region, schedule the resource in the third region to the first tenant, to implement one or more services that belong to the first tenant by using the resource in the third region. In this way, flexible resource scheduling can be performed for the first tenant.

In a possible implementation, the resource scheduling apparatus may further predict a part of an elastic resource that is of each tenant and that is not used by a corresponding tenant in a resource running time period. In this way, the resource scheduling apparatus may schedule a resource to the first tenant from a part that is of the second elastic resource and that is not required by the second tenant in the resource running time period. In this way, the resource scheduling apparatus may determine, based on a resource running time period of each tenant, which tenants are selected as the second tenant, to further allocate the elastic resource that is not used by the second tenant to the first tenant for use in the resource running time period.

In a possible implementation, the first resource reservation request includes a resource reservation quantity. When reserving the first elastic resource for the first tenant, the resource scheduling apparatus may determine the quantity of the first elastic resources based on a historical resource utilization status of the first tenant and/or a historical resource utilization status of another tenant of the cloud infrastructure. The quantity of the first elastic resources is less than the resource reservation quantity. In this way, the resource scheduling apparatus may reserve an appropriate resource for the first tenant, to avoid usually insufficient reserved resources of the first tenant due to excessive resource reservation, and a waste of resources due to insufficient resource reservation.

In a possible implementation, before allocating the resource to the first tenant, the resource scheduling apparatus may present a resource scheduling interface. The resource scheduling interface displays a candidate resource that can be allocated to the first tenant. The candidate resource does not meet a requirement of the resource allocation request. Then, the resource scheduling apparatus may select, based on a selection operation performed by the first tenant on the candidate resource, a part of the candidate resource to allocate the part of the candidate resource to the first tenant. In this way, the first tenant may participate in a resource scheduling process, to implement secondary resource scheduling by the first tenant, so that a resource subsequently scheduled to the first tenant meets an expectation of the tenant, and further, tenant experience is improved.

In a possible implementation, the candidate resource may include one or more of the elastic resource, the resource obtained by reclaiming the deletable instance, the resource obtained by reclaiming the replaceable instance, and a resource obtained by reclaiming the migratable instance.

In a possible implementation, the resource allocation request may include any one or more of a quantity of elastic resources requested by the first tenant, a resource running time period of the elastic resource requested by the first tenant, a region to which the elastic resource requested by the first tenant belongs, a specification of the elastic resource, a latency condition, and a network bandwidth constraint. In this case, when scheduling a resource for the first tenant, the resource scheduling apparatus may schedule, to the first tenant, an elastic resource that is pre-allocated to the second tenant and that meets the resource allocation request. In this way, a new resource scheduled for the first tenant can meet a requirement of the first tenant.

In a possible implementation, the resource allocation request includes a plurality of specifications and/or identifiers of a plurality of regions of the elastic resource. In this case, when scheduling the resource for the first tenant, the resource scheduling apparatus may schedule resources having the plurality of specifications and/or in different regions to the first tenant. In this way, resource scheduling flexibility can be improved.

In a possible implementation, the resource scheduling apparatus calculates, based on any one or more of elastic resources, deletable instances, replaceable instances, and migratable instances of tenants of the cloud infrastructure, a quantity of reserved resources that can be provided, and rejects the first resource reservation request when a quantity of resources that the first resource reservation request requests to reserve is greater than the quantity of the reserved resources that can be provided.

In a possible implementation, the resource scheduling apparatus may notify the first tenant of a quantity of reserved resources that can be provided, and receive another resource reservation request sent by the first tenant based on the quantity of the reserved resources.

According to a second aspect, this application provides a resource scheduling method. The resource scheduling method may be performed by a corresponding resource scheduling apparatus. The resource scheduling apparatus receives a first resource reservation request and a second resource reservation request, reserves a first elastic resource for a first tenant in a cloud infrastructure based on the first resource reservation request, and reserves a second elastic resource for a second tenant in the cloud infrastructure based on the second resource reservation request. When a service volume of the first tenant increases, the resource scheduling apparatus may receive a resource allocation request sent by the first tenant. The resource allocation request requests the resource scheduling apparatus to allocate a resource, for example, any one or more of a computing resource, a storage resource, and a network resource, to the first tenant in the cloud infrastructure. In addition, when it is determined that a quantity of the resources requested by the resource allocation request is greater than a quantity of first elastic resources reserved by the resource scheduling apparatus for the first tenant in advance, the resource scheduling apparatus may reclaim any one or more of the following: a deletable instance (such as a spot instance and/or an offline computing instance) used by a third tenant, a replaceable instance used by a fourth tenant, and a migratable instance used by a fifth tenant. The third tenant has confirmed that the deletable instance is allowed to be reclaimed during running, the fourth tenant has confirmed that the replaceable instance is allowed to be replaced during running, and the fifth tenant has confirmed that the migratable instance is allowed to be migrated during running.

According to a third aspect, this application provides a resource scheduling apparatus. The resource scheduling apparatus includes:
a communication module, configured to receive a first resource reservation request, a second resource reservation request, and a resource allocation request, where the resource allocation request requests to allocate a resource to a first tenant in a cloud infrastructure; and
a resource scheduling module, configured to reserve a first elastic resource for the first tenant in the cloud infrastructure based on the first resource reservation request, reserve a second elastic resource for a second tenant in the cloud infrastructure based on the second resource reservation request, determine that a quantity of the resources requested by the resource allocation request is greater than a quantity of first elastic resources, and allocate a resource to the first tenant from the second elastic resource.

In a possible implementation, the resource allocation request includes a resource running time period. The resource scheduling module is configured to allocate a resource to the first tenant from a part that is of the second elastic resource and that is not required by the second tenant in the resource running time period, and after the resource running time period ends, release the resource allocated to the first tenant from the second elastic resource back to the second elastic resource.

In a possible implementation, the resource scheduling apparatus further includes:
a reclaiming module, configured to reclaim a deletable instance used by a third tenant, where the third tenant has confirmed that the deletable instance is allowed to be reclaimed during running.

The resource scheduling module is further configured to schedule, to the first tenant, a resource obtained by reclaiming the deletable instance.

In a possible implementation, the resource allocation request includes an instance specification. The resource scheduling apparatus further includes:
the reclaiming module, configured to reclaim a replaceable instance used by a fourth tenant, where a specification of the replaceable instance is the instance specification, and the fourth tenant has confirmed that the replaceable instance is allowed to be replaced during running.

The resource scheduling module is further configured to schedule, to the first tenant, a resource obtained by reclaiming the replaceable instance, and allocate an instance of another specification to the fourth tenant to replace the replaceable instance.

In a possible implementation, a price at which the fourth tenant purchases the replaceable instance is lower than a price at which the fourth tenant purchases the non-replaceable instance. The non-replaceable instance and the replaceable instance have a same specification, but the non-replaceable instance is not allowed to be replaced during running.

In a possible implementation, the resource allocation request includes an identifier of a target region of the cloud infrastructure. The resource scheduling apparatus further includes:
the reclaiming module, configured to reclaim a migratable instance used by a fifth tenant, where the migratable instance belongs to the target region, and the fifth tenant has confirmed that the migratable instance is allowed to be migrated during running.

The resource scheduling module is further configured to schedule, to the first tenant, a resource obtained by reclaiming the migratable instance, and migrate the migratable instance of the fifth tenant to another region.

In a possible implementation, a price at which the fifth tenant purchases the migratable instance is lower than a price at which the fifth tenant purchases a non-migratable instance. The non-migratable instance and the migratable instance belong to a same region, but the non-migratable instance is not allowed to be migrated during running.

In a possible implementation, the resource allocation request includes identifiers of a first region and a second region in the cloud infrastructure. A priority of allocating a resource in the first region to the first tenant is higher than a priority of allocating a resource in the second region to the first tenant.

The resource scheduling module is further configured to determine that a quantity of resources that are in the first region and that can be allocated to the first tenant is less than the quantity of the resources requested by the resource allocation request, and allocate the resource in the second region to the first tenant.

In a possible implementation, the resource scheduling module is further configured to implement different services of the first tenant based on resource configuration of the first tenant for a service and by using the resource in the first region in the cloud infrastructure and the resource in the second region in the cloud infrastructure.

In a possible implementation, the resource scheduling module is further configured to present a resource allocation prompt interface, where the resource allocation prompt interface displays a resource in a third region in the cloud infrastructure; and in response to a resource allocation confirmation operation of the first tenant for the third region, schedule the resource in the third region to the first tenant.

In a possible implementation, the resource scheduling module is further configured to predict a part that is of the second elastic resource and that is not required by the second tenant in the resource running time period.

In a possible implementation, the first resource reservation request includes a resource reservation quantity.

The resource scheduling module is configured to determine the quantity of the first elastic resources based on a historical resource utilization status of the first tenant and/or a historical resource utilization status of another tenant of the cloud infrastructure. The quantity of the first elastic resources is less than the resource reservation quantity.

In a possible implementation, the resource scheduling module is further configured to: before allocating the resource to the first tenant, present a resource scheduling interface to the first tenant, where the resource scheduling interface displays a candidate resource that can be allocated to the first tenant, and the candidate resource does not meet a requirement of the resource allocation request; and select, based on a selection operation performed by the first tenant on the candidate resource, a part of the candidate resource to allocate the part of the candidate resource to the first tenant.

In a possible implementation, the resource allocation request includes a plurality of instance specifications.

In a possible implementation, the resource scheduling module is further configured to calculate, based on any one or more of elastic resources, deletable instances, replaceable instances, and migratable instances of tenants of the cloud infrastructure, a quantity of reserved resources that can be provided; and reject the first resource reservation request when a quantity of resources that the first resource reservation request requests to reserve is greater than the quantity of the reserved resources that can be provided.

According to a fourth aspect, this application provides a resource scheduling apparatus. The resource scheduling apparatus includes modules configured to implement the resource scheduling method in the second aspect.

According to a fifth aspect, this application provides a computer device. The computer device includes a processor and a memory. The memory is configured to store instructions. When the computer device runs, the processor executes the instructions stored in the memory, to enable the computer device to perform the foregoing resource scheduling method in any one of the first aspect or the possible implementations of the first aspect. It should be noted that the memory may be integrated into the processor, or may be independent of the processor. The computer device may further include a bus. The processor is connected to the memory through the bus. The memory may include a readable memory and a random access memory.

According to a sixth aspect, this application provides a computer device. The computer device includes a processor and a memory. The memory is configured to store instructions. When the computer device runs, the processor executes the instructions stored in the memory, to enable the computer device to perform the foregoing resource scheduling method in the second aspect. It should be noted that the memory may be integrated into the processor, or may be independent of the processor. The computer device may further include a bus. The processor is connected to the memory through the bus. The memory may include a readable memory and a random access memory.

According to a seventh aspect, this application provides a computer-readable storage medium. The computer-readable storage medium stores instructions, and when the instructions are run on a computer device, the computer device is enabled to perform the foregoing method in any one of the first aspect or the implementations of the first aspect.

According to an eighth aspect, this application provides a computer-readable storage medium. The computer-readable storage medium stores instructions, and when the instructions are run on a computer device, the computer device is enabled to perform the foregoing method in the second aspect.

According to a ninth aspect, this application provides a resource scheduling system. The resource scheduling system includes the foregoing resource scheduling apparatus and the cloud infrastructure in any one of the third aspect or the implementations of the third aspect, or the fourth aspect. The cloud infrastructure includes one or more computers, and the one or more computers are configured to implement a service for a tenant in the cloud infrastructure.

According to a tenth aspect, this application provides a computer program product including instructions. When the computer program product runs on a computer device, the computer device is enabled to perform the foregoing method in any one of the first aspect or the implementations of the first aspect.

According to an eleventh aspect, this application provides a computer program product including instructions. When the computer program product runs on a computer device, the computer device is enabled to perform the foregoing method according to the second aspect.

In this application, based on the implementations according to the foregoing aspects, the implementations may be further combined to provide more implementations.

### BRIEF DESCRIPTION OF DRAWINGS

To describe technical solutions in embodiments of this application more clearly, the following briefly describes accompanying drawings for describing embodiments. It is clear that the accompanying drawings in the following description show merely some embodiments of this application, and a person of ordinary skill in the art may still derive other drawings from these accompanying drawings.
FIG. 1 is a schematic diagram of a change of a quantity of resources required by an internet tenant within 24 hours;
FIG. 2 is a schematic diagram of an architecture of a resource scheduling system;
FIG. 3 is a schematic flowchart of a resource scheduling method according to an embodiment of this application;
FIG. 4 is a schematic diagram of an example service configuration interface according to an embodiment of this application; and
FIG. 5 is a schematic diagram of a structure of a computer device 500 according to an embodiment of this application

### DESCRIPTION OF EMBODIMENTS

In the specification, claims, and accompanying drawings of this application, the terms such as "first" and "second" are intended to distinguish between similar objects but do not necessarily indicate a specific order or sequence. It should be understood that the terms used in such a way are interchangeable in proper circumstances, and this is merely a discrimination manner for describing objects having a same attribute in embodiments of this application.

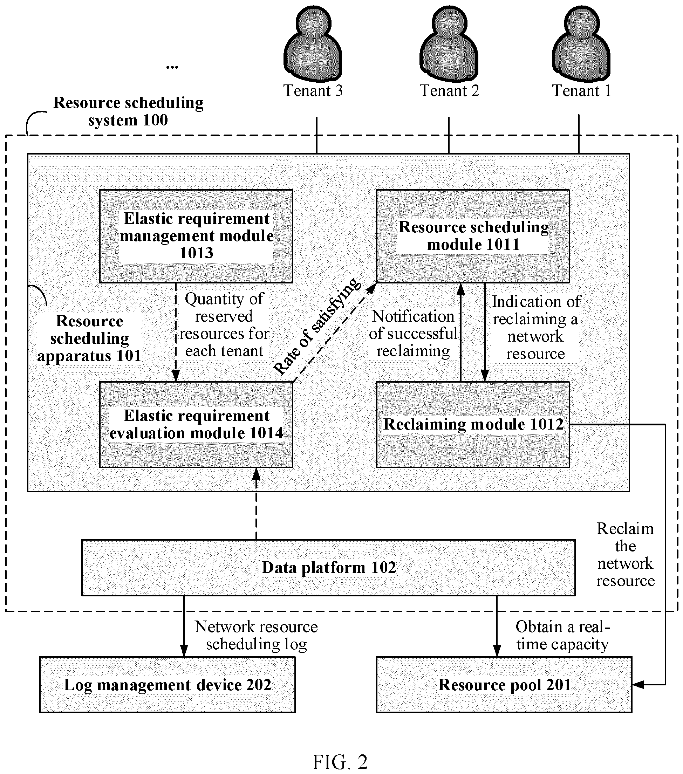

FIG. 2 shows a specific architecture of a resource scheduling system. As shown in FIG. 2, the resource scheduling system 100 includes a resource scheduling apparatus 101 and a data platform 102. In addition, the resource scheduling apparatus 101 may be connected to the data platform 102 in a wired or wireless manner. The resource scheduling apparatus 101 is configured to allocate a resource to a plurality of tenants that access the resource scheduling system 100 (where in FIG. 1, an example in which three tenants access the resource scheduling system 100 is used for description, and the tenants are respectively a tenant 1, a tenant 2, and a tenant 3). The data platform 102 may be connected to a resource pool 201, and obtain a real-time capacity of the resource pool 201, to be specific, a quantity of unallocated resources included in the resource pool 201. In addition, the data platform 102 may further be connected to a log management device 202, and write a scheduling log for a resource in the resource pool 201 into the log management device 202.

The tenant 1 to the tenant 3 may request the resource scheduling apparatus 101 to allocate a resource to the tenant 1 to the tenant 3, to implement one or more services of the tenants based on the requested resource. During actual application, the tenant 1 to the tenant 3 may specifically request the resource by using corresponding user equipment (user equipment, UE). A quantity of resources required by each tenant in different time periods is not constant. For example, in a time period from 20:00 to 24:00, a quantity of resources required by the tenant may be 5 to 10 times of a quantity of resources required in another time period. Therefore, when allocating the resource to the tenant 1 to the tenant 3, to enable each tenant to have sufficient resources in any time period to support a service of the tenant (that is, ensure an SLA commitment of the tenant), the resource scheduling apparatus 101 may allocate, based on a maximum quantity of resources required by each tenant, the resource to the tenant. However, each tenant usually requires a small quantity of resources in most time periods. As a result, a large quantity of resources in the resources allocated by the resource scheduling apparatus 101 are in an idle state for long time, and resource utilization is low.

Based on this, an embodiment of this application provides a resource scheduling method. The resource scheduling apparatus 101 may reserve a corresponding elastic resource for each tenant in a cloud infrastructure based on a received resource reservation request corresponding to each tenant. When a resource allocated to the tenant 1 does not meet a current resource requirement of the tenant 1, the tenant 1 may send a resource allocation request to the resource scheduling apparatus 101, to request the resource scheduling apparatus 101 to allocate a new resource to the tenant 1. When a quantity of resources requested by the tenant 1 is greater than a quantity of elastic resources reserved for the tenant 1 in advance, the resource scheduling apparatus 101 allocates, based on the resource allocation request, a resource to the tenant 1 from elastic resources allocated to the tenant 2 and the tenant 3 in advance, to increase the resource currently allocated to the tenant 1, so that the resource currently allocated to the tenant 1 can meet an SLA corresponding to the tenant 1.

When the resource allocated to the tenant 1 does not meet the current resource requirement, the resource scheduling apparatus 101 schedules a part or all of elastic resources of another tenant to the tenant 1. Therefore, on one hand, more resources are allocated to the tenant 1, to meet service quality required by the SLA signed by the tenant 1. On the other hand, elastic resources that are temporarily not required by the tenant 2 and the tenant 3 can be used by the tenant 1 to improve the resource utilization. In this way, the resource utilization can be improved while the SLA commitment corresponding to the tenant 1 is met.

It should be understood that an example in which the resource scheduling apparatus 101 allocates the new resource to the tenant 1 is used for description herein. When the tenant 2 (or the tenant 3) requests the resource scheduling apparatus 101 to allocate a new resource to the tenant 2 (or the tenant 3), the resource scheduling apparatus 101 may alternatively allocate an elastic resource of the tenant 1 to the tenant 2 (or the tenant 3) by using a process similar to the foregoing process.

For example, the resource scheduling apparatus 101 may be implemented by software, for example, may be a computer program running on any device in the resource scheduling system 100. Alternatively, the resource scheduling apparatus 101 may be implemented by hardware. For example, the resource scheduling apparatus 101 may be a server or a computer in the resource scheduling system 100. Alternatively, the resource scheduling apparatus 101 may be a device implemented by using an application-specific integrated circuit (application-specific integrated circuit, ASIC) or a programmable logic device (programmable logic device, PLD). The foregoing PLD may be a complex program logic device (complex programmable logical device, CPLD), a field programmable gate array (field programmable gate array, FPGA), a generic array logic (generic array logic, GAL), or any combination thereof.

During actual application, the resource scheduling system 100 shown in FIG. 2 may be deployed on a cloud, for example, may be deployed on a public cloud, an edge cloud, or a distributed cloud. Alternatively, the resource scheduling system may be deployed in an intelligent virtual network, for example, a content delivery network (Content Delivery Network, CDN). In addition, for example, the resource scheduling system 100 may be applied to an application scenario such as a video cloud, a cloud game, or virtual reality (virtual Reality, VR). When the resource scheduling system 100 is applied to an edge cloud scenario, an attribute such as a region to which a resource scheduled for a tenant belongs or an access policy may be further limited. In this embodiment, a specific deployment scenario and application scenario of the resource scheduling system 100 are not limited.

It should be noted that the resource scheduling system shown in FIG. 2 is merely used as an example for description, and is not used to limit specific implementation of the resource scheduling system. For example, in another possible implementation, the resource scheduling system may include more function modules to support the resource scheduling system in having more other functions. Alternatively, tenants accessing the resource scheduling system are not limited to the foregoing tenant 1 to the tenant 3, but may include more tenants.

For ease of understanding, the following describes embodiments of this application with reference to the accompanying drawings.

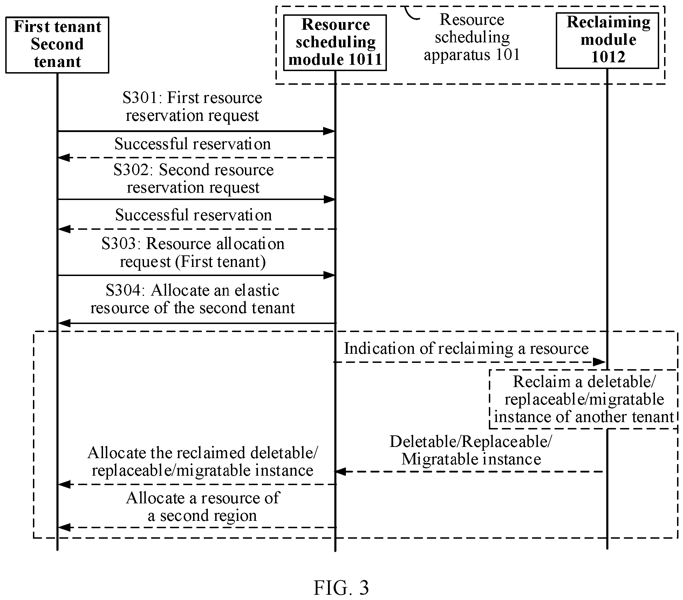

FIG. 3 is a schematic flowchart of a resource scheduling method according to an embodiment of this application. The resource scheduling method shown in FIG. 3 may be applied to the resource scheduling system 100 shown in FIG. 2, or applied to another applicable resource scheduling system. For ease of description, in this embodiment, an example in which the resource scheduling system 100 shown in FIG. 2 is applied and the resource scheduling apparatus 101 performs the resource scheduling method shown in FIG. 3 is used for description.

Based on the resource scheduling system 100 shown in FIG. 2, the resource scheduling method shown in FIG. 3 may specifically include the following steps.

S301: The resource scheduling apparatus 101 receives a first resource reservation request that is for an elastic resource and that is sent by a first tenant, and reserves a first elastic resource for the first tenant in a cloud infrastructure based on the first resource reservation request.

S302: The resource scheduling apparatus 101 receives a second resource reservation request that is for the elastic resource and that is sent by a second tenant, and reserves a second elastic resource for the second tenant in the cloud infrastructure based on the second resource reservation request.

In this embodiment, the resource scheduling apparatus 101 may allocate a specific quantity of resources (referred to as a basic resource below) to each tenant in advance, for example, allocate a corresponding resource based on a quantity of resources required by the tenant in most time periods, so that each tenant can implement a service of the tenant in the most time periods based on the allocated resources. The resource allocated by the resource scheduling apparatus 101 includes one of or a combination of a computing resource (such as a virtual machine), a storage resource (such as a hard disk), or a network resource (such as an IP address or network bandwidth).

During actual application, a resource required by a part of (or all of) tenants may fluctuate greatly in some time periods. Therefore, the tenant may sign an SLA with a service provider (for example, an operator), and expects that sufficient resources can be allocated to the tenant in any time period with a specific fee being paid, to ensure that a service of the tenant can be implemented. Correspondingly, the service provider may perform corresponding resource scheduling for the tenant by using the resource scheduling apparatus 101. Specifically, when allocating a basic resource to the tenant, the resource scheduling apparatus 101 may further reserve a specific resource (which is referred to as an elastic resource below) for the tenant that signs the SLA, so that a resource that the tenant has can implement the service of the tenant in any time period.

During specific implementation, the tenant may send a resource reservation request for the elastic resource to the resource scheduling apparatus 101, and the resource scheduling apparatus 101 (which may be specifically a resource scheduling module 1011) may reserve a corresponding elastic resource for the tenant in the cloud infrastructure based on the resource reservation request. The cloud infrastructure may include a data center in one or more regions (region). The data center has corresponding computing, storage, and network resources, and may provide a corresponding business service for the tenant. A resource quantity of the reserved elastic resources may be determined by the resource scheduling apparatus 101, or may be specified by the tenant. For example, the resource scheduling apparatus 101 may allocate a corresponding quantity of elastic resources to the tenant based on a resource quantity that is indicated by the tenant and that is carried in the reservation request.

In an example of an actual application, the first resource reservation request sent by the first tenant may include a resource reservation quantity, for example, a maximum reserved resource required by the first tenant. When reserving the first elastic resource for the first tenant, the resource scheduling apparatus 101 may determine the quantity of the first elastic resources based on a historical resource utilization status of the first tenant and/or a historical resource utilization status of another tenant of the cloud infrastructure. The quantity of the first elastic resources is less than the resource reservation quantity. In this way, a waste of resources due to excessive resource reservation, and insufficient reserved resources in most time due to insufficient resource reservation can be effectively avoided.

In a possible implementation, the resource reservation request sent by the tenant to the resource scheduling apparatus 101 may carry any one or more of the following information: a resource quantity of elastic resources applied for by the tenant, a time period used by the elastic resource, a region to which the elastic resource belongs, a specification of the elastic resource, a latency condition, and a network bandwidth constraint, so that when allocating the elastic resource to the tenant, the resource scheduling apparatus 101 may allocate (namely, reserve) a corresponding elastic resource to the tenant based on the information carried in the reservation request.

The resource quantity of the elastic resources reserved by the resource scheduling apparatus 101 for the tenant is the resource quantity carried in the resource reservation request. For example, the resource quantity of the elastic resources may specifically include any one or more of a quantity of virtual machines (virtual machine, VM), a quantity of CPU cores, a quantity of memories, and a quantity of pods (Pod).

Time period information included in the resource reservation request may indicate a time period in which the elastic resource reserved by the resource scheduling apparatus 101 for the tenant provides a service, for example, indicate a time period from 17:00 to 24:00.

Region information included in the resource reservation request may indicate a region to which the elastic resource reserved by the resource scheduling apparatus 101 for the tenant belongs. The region includes a region (region), for example, cn-north-4a (representing a 4a region in northern China) or cn-north-4b (representing a 4b region in northern China), one or more availability zones (availability zone, AZ) within a region range, one or more data centers (data center, DC) within an AZ range, or a site. The region may alternatively include geographical regions, for example, city-level geographical areas such as Beijing and Shenzhen. The tenant may restrict the region to which the elastic resource belongs by using a blocklist or a trustlist. For example, in a process in which the tenant applies for the elastic resource, the region information in the reservation request may be, for example, represented as a region list, for example, a region list (including one or more region names) or an AZ list (including one or more AZ names), and indicates that a resource that belongs to any region in the region list or a resource that belongs to any AZ in the AZ list may be allocated to the tenant. In this way, resources can be flexibly scheduled in a plurality of regions, to improve flexibility of implementing the solution.

The specification of the elastic resource indicated in the resource reservation request may indicate a specification of the resource allocated by the resource scheduling apparatus 101 to the tenant, for example, c6.4xlarge.2 (which represents a c6 model and has a specification of 16 cores and 32 GB memory), c6s.4xlarge.2 (which represents a c6s model and has a specification of 16 cores and 32 GB memory), c6.8xlarge.4 (which represents a c6 model and has a specification of 32 cores and 128 GB memory), and m6.4xlarge.8 (which represents an m6 model and has a specification of 16 cores and 128 GB memory). The tenant may limit the resource specification or the like by using a blocklist or a trustlist, or limit the resource specification by specifying a quantity of cores and/or a quantity of memories. In this way, resources of a plurality of specifications can be scheduled for the first tenant, to improve the flexibility of implementing the solution.

The latency condition in the resource reservation request may indicate that a communication latency between the elastic resource reserved by the resource scheduling apparatus 101 for the tenant and the tenant (used user equipment) meets, for example, does not exceed 10 ms. In this way, a latency of providing a service by the elastic resource of the tenant can be reduced. Correspondingly, when allocating the elastic resource to the tenant, the resource scheduling apparatus 101 may allocate, to the tenant, a resource in any region that meets the latency condition.

The network bandwidth constraint in the resource reservation request may be used to limit a bandwidth of the elastic resource reserved by the resource scheduling apparatus 101 for the tenant, for example, limit the bandwidth of the elastic resource below a preset bandwidth upper limit.

It should be noted that, during actual application, the resource reservation request sent by the tenant may include any one or more of the foregoing information, or may include other information, for example, a limitation condition including a data transmission cost, to limit, by using the limitation condition, that a data transmission cost upon communication of the tenant on the elastic resource is less than a preset cost.

Further, after successfully reserving the elastic resource for each tenant, the resource scheduling apparatus 101 may feed back a reservation success notification to the tenant.

In this embodiment, the resource scheduling apparatus 101 may determine the base resource and the elastic resource in the following two example manners.

In an example, the resource scheduling apparatus 101 may obtain an average value and a maximum value of a resource quantity of resources required by the tenant in a historical time period (for example, within 24 hours closest to a current moment), determine a difference between the maximum value and the average value as a resource quantity of the elastic resources, and determine the average value as a resource quantity of the base resources.

In another example, the resource scheduling apparatus 101 may alternatively determine the base resource and the elastic resource in a data prediction manner. During specific implementation, for each tenant, the resource scheduling apparatus 101 may obtain a resource required by the tenant in a historical time period. The resource may specifically include time information, resource quantity information of the resource, and resource combination information (for example, including the computing resource and the storage resource). Then, the resource scheduling apparatus 101 may input the obtained information into a machine learning model that completes training in advance, so that the machine learning model outputs a resource required by the tenant in a future time period (for example, future 24 hours). In this way, a time period (which may be represented as a periodicity) in which a resource quantity of the resources required by the tenant suddenly increases, a quantity of required resources, a resource combination rule, and the like in the future may be predicted. A minimum resource quantity predicted by the machine learning model may be a resource quantity of the base resources. In addition, because the resource scheduling apparatus 101 reserves the elastic resource for the tenant based on a maximum resource quantity of the resources required by the tenant in the historical time period, a requirement on a resource in an entire network is high. Therefore, the machine learning model may further output a resource quantity of the elastic resources based on input data, and a sum of resource quantities of the basic resources allocated by the resource scheduling apparatus 101 to the tenant and the elastic resources does not exceed the maximum resource quantity of the resources required by the tenant in the historical time period, so that the resource scheduling apparatus 101 may allocate the elastic resource to the tenant based on the resource quantity of the elastic resources output by the machine learning model.

During actual application, the resource scheduling apparatus 101 may reserve and create a corresponding elastic resource for the tenant based on the reservation request. Alternatively, the resource scheduling apparatus 101 may not perform an actual resource creation operation when reserving the elastic resource for the tenant, but create the resource when the tenant requests the reserved elastic resource.

S303: The first tenant sends the resource allocation request to the resource scheduling apparatus 101. The resource allocation request requests the resource scheduling apparatus 101 to allocate a new resource to the first tenant in the cloud infrastructure.

During actual application, when a service volume increases or is about to increase, the tenant may request a new resource from the resource scheduling apparatus 101. The resource scheduling apparatus 101 may schedule, to the tenant, the elastic resource reserved for the tenant, to meet a suddenly increased quantity of resources required by the tenant. However, when the service volume of the tenant increases greatly, the newly increased quantity of the resources required by the internet tenant (in other words, a resource quantity of the resources requested by the tenant) may exceed the resource quantity of the elastic resources reserved by the resource scheduling apparatus 101 for the tenant. As a result, after the resource scheduling apparatus 101 schedules the reserved elastic resource to the tenant, a resource (including a basic resource and an elastic resource) currently allocated to the tenant may still not meet a requirement of the tenant. In this case, the resource scheduling apparatus 101 may further allocate a new resource to the tenant. For ease of understanding and differentiation, an example in which the first tenant requests the resource scheduling apparatus 101 to allocate the new resource is used for description below.

In a possible implementation, the first tenant may send the resource allocation request to the resource scheduling apparatus 101 by using corresponding user equipment, to request the resource scheduling apparatus 101 to allocate more new resources to the first tenant, so as to meet a current resource requirement of the first tenant. The resource allocation request may include identifiers of one or more specifications/regions, so that the resource scheduling apparatus 101 may schedule a resource of the one or more specifications to the first tenant, or schedule a resource that belongs to the one or more regions to the first tenant.

During actual application, the resource allocation request sent by the first tenant may include a quantity of the newly allocated resources that the first tenant requests, so that the resource scheduling apparatus 101 allocates a corresponding quantity of resources to the first tenant based on the resource quantity. Further, in this embodiment, an upper limit of a quantity of resources that the first tenant requests to allocate may be further limited. In this way, the first tenant can be prevented from detecting a resource pool capacity of the network by requesting an excessively large resource.

S304: When the resource scheduling apparatus 101 determines that a quantity of resources requested by the resource allocation request is greater than the quantity of the first elastic resources reserved in advance for the first tenant, the resource scheduling apparatus 101 allocates a resource to the first tenant from the second elastic resource reserved in advance for the second tenant.

When a quantity of resources required by the first tenant is large, the resource scheduling apparatus may schedule, to the first tenant, all or a part of resources from elastic resources reserved for another tenant (including the second tenant). In this way, a quantity of resources allocated to the first tenant may be increased, to meet a service requirement of the first tenant.

Further, the resource allocation request received by the resource scheduling apparatus 101 may include a resource running time period, to indicate that the new resource allocated by the resource scheduling apparatus 101 to the first tenant is used in the resource running time period. In an implementation example, the resource scheduling apparatus 101 may predict, by using the machine learning model that completes training in advance, a temporary usage status of an elastic resource of each tenant in each time period. In this way, when scheduling a resource for the first tenant, the resource scheduling apparatus 101 may allocate, to the first tenant, an elastic resource that is not used by the another tenant in a resource running time period, to reuse the elastic resource of the another tenant, so as to improve the resource utilization.

In a possible implementation, the resource allocation request sent by the first tenant to the resource scheduling apparatus 101 may carry any one or more of the following information: a resource quantity of an elastic resource requested by the first tenant, a resource running time period of the elastic resource requested by the first tenant, a region to which the elastic resource requested by the first tenant belongs, a specification of the elastic resource requested by the first tenant, a latency condition, and a network bandwidth constraint, so that the resource scheduling apparatus 101 may schedule, to the first tenant, based on the information carried in the resource allocation request, an elastic resource that is of a tenant (referred to as a second tenant below) and that meets the resource allocation request. During specific implementation, the resource scheduling apparatus 101 may obtain an application programming interface (application programming interface, API) for invoking the elastic resource of the second tenant, and provide the API of the elastic resource for the first tenant, so that the first tenant invokes the elastic resource of the second tenant by accessing the API to implement a service. During actual application, when scheduling the elastic resource of the another tenant to the first tenant, the resource scheduling apparatus 101 may first release a resource that is pre-created for the another tenant, and re-create a resource for the first tenant based on the released resource. Then, the resource scheduling apparatus 101 allocates the re-created resource to the first tenant. A similar scheduling process may be used for all new resources that are scheduled by the resource scheduling apparatus 101 to the first tenant and that are described subsequently, and related parts are not described below. It should be noted that the second tenant may be one or more tenants.

In another possible implementation, the resource scheduling apparatus 101 may alternatively determine, based on the foregoing information such as a region, a specification, and a latency that is carried in the reservation request sent by the first tenant to the resource scheduling apparatus 101 in advance, an elastic resource of the second tenant that meets the reservation request, and reschedule the elastic resource of the second tenant to the first tenant. In this embodiment, a specific implementation in which the resource scheduling apparatus 101 determines an elastic resource to be reclaimed is not limited.

Because the second tenant temporarily does not need the elastic resource re-scheduled to the first tenant in a resource running time period, the resource scheduling apparatus 101 may allocate these elastic resources to the first tenant, so that more resources can be allocated to the first tenant, and the first tenant can implement, based on the more resources, an added service of the first tenant. In addition, because the second tenant temporarily does not use the elastic resource in the resource running time period, it can be avoided that after a part or all of the elastic resources of the second tenant is reclaimed, it is difficult to ensure an SLA commitment of the second tenant in the resource running time period due to insufficient resources, consequently, impact on implementation of a service of the second tenant is reduced. In the resource running time period, the resource allocated to the first tenant includes a base resource of the first tenant, an elastic resource of the first tenant, and an elastic resource newly allocated by the resource scheduling apparatus 101 to the first tenant.

During actual application, when the resource scheduling apparatus 101 schedules the elastic resource of the second tenant to the first tenant, and a resource quantity of the elastic resources allocated to the first tenant still does not reach a resource quantity of elastic resources that needs to be newly allocated to the first tenant, the resource scheduling apparatus 101 may further obtain more resources in another manner to allocate the resources to the first tenant. In this embodiment, the following three example implementations are provided.

In this application, an instance may be the virtual machine or a container. The instance is created based on various resources (the computing resource, the storage resource, and the network resource). The resource scheduling apparatus 101 may create an instance of a specific specification based on the resources. Alternatively, the resource scheduling apparatus 101 may reclaim a created instance, to release various resources occupied by the created instance. The released resources may be used to create a new instance. A specification of the new instance may be the same as or different from a specification of the reclaimed instance.

Implementation 1: The resource scheduling apparatus 101 may increase a resource of the first tenant by reclaiming a part of resources of another tenant (referred to as a third tenant below) and allocating the resources to the first tenant.

During specific implementation, as shown in FIG. 2, the resource scheduling apparatus 101 may include the resource scheduling module 1011 and a reclaiming module 1012. The resource scheduling module 1011 may receive the resource allocation request sent by the first tenant, and allocate the new resource to the first tenant based on the resource allocation request. During actual application, the resource scheduling apparatus 101 may receive, by using a separately configured communication module (not shown in FIG. 2), the resource allocation request sent by the first tenant, and transmit the resource allocation request to the resource scheduling module 1011. It is clear that the communication module may alternatively be integrated into the resource scheduling module 1011, which is not limited in this embodiment. After the elastic resource of the second tenant is scheduled to the first tenant, when the quantity of the resources newly allocated to the first tenant still does not reach the resource quantity required by the first tenant, the resource scheduling module 1011 may send a resource reclaiming indication to the reclaiming module 1012. The indication may include a quantity of resources that need to be reclaimed. The reclaiming module 1012 determines, based on the indication, the third tenant (which may be one or more tenants) on which resource reclaiming is to be performed, and reclaim a part or all of deletable instances used by the third tenant in a resource running time period. The deletable instance is a resource that is confirmed by the third tenant in advance to be allowed to be reclaimed. Then, the reclaiming module 1012 may feed back a reclaiming success notification to the resource scheduling module 1011, and notify the resource scheduling module 1011 of the reclaimed deletable instance, so that the resource scheduling module 1011 schedules, to the first tenant, a resource obtained by reclaiming the deletable instance, as shown in FIG. 3. In this way, the quantity of the new resources allocated to the first tenant may be further increased.

In an actual application scenario, the reclaimed resource of the third tenant may be, for example, a resource that is purchased by the third tenant and that has low SLA assurance, such as a spot instance or a spot block (spot block) instance. The spot instance purchased by the third tenant may implement services of the third tenant, such as image rendering, gene sequencing, a stateless web service, offline analysis, function computing, batch computing, sample analysis, continuous integration (continuous integration, CI)/continuous delivery (continuous Delivery, CD), and testing. In addition, when a market price is higher than a price at which the tenant purchases the spot instance or when resources are insufficient, the spot instance purchased by the third tenant may be reclaimed by the resource scheduling apparatus 101. During actual application, the resource scheduling apparatus 101 may send, to the tenant, a notification of reclaiming the spot instance, and reclaim the spot instance after obtaining confirmation from the third tenant or after preset duration (for example, 5 minutes). For the spot block instance purchased by the third tenant, a service in a stateless, fault tolerant, or flexible application scenario such as image and media, big data analysis, a web application, and high-performance computing, of the tenant may be implemented. In addition, when the resources are insufficient, the resource scheduling apparatus 101 may reclaim the spot block instance of the third tenant. For example, based on a policy that the spot instance or the spot block instance may be reclaimed in any time period, the third tenant may purchase the spot/spot block instance at a low cost, to be specific, a price paid by the third tenant for owning the deletable instance is lower than a price paid by the third tenant for owning another resource. The resource scheduling apparatus 101 may periodically reclaim a spot/spot block instance that meets a reclaiming condition, or actively reclaim the spot/spot block instance of the third tenant when determining that the resources are insufficient.

When the newly allocated resource that is currently required by the first tenant includes the computing resource, the deletable instance reclaimed by the resource scheduling apparatus 101 may further include an offline computing resource. The offline computing resource is a computing resource that completes, before a specified deadline, an offline computing task corresponding to the offline computing resource. Before the deadline, time for specific execution of the offline computing resource and completion of the offline computing task are not limited. In this case, the offline computing resource allocated to the first tenant may stop executing the offline computing task in the resource running time period, and then complete a corresponding computing task for the first tenant. After the resource running time period ends, the offline computing resource may continue to execute the offline computing task that is interrupted previously. It should be understood that a deadline at which the offline computing task is required to be completed is usually later than an end moment of the resource running time period.

Alternatively, the resource scheduling module 1011 may reclaim, based on the resource allocation request sent by the first tenant, a replaceable instance used by a fourth tenant in a resource running time period. The replaceable instance is a resource that is confirmed by the fourth tenant in advance to be allowed to be replaced by another resource, so that a service of the fourth tenant implemented by the replaceable instance may be implemented by the another resource. Correspondingly, a resource obtained by reclaiming the replaceable instance may be scheduled by the resource scheduling module 1011 to the first tenant, to increase the resource allocated to the first tenant. In specific implementation, the resource allocation request sent by the first tenant may carry an instance specification of the resource requested by the first tenant. In this case, when reclaiming the replaceable instance of the fourth tenant, the resource scheduling module 1011 specifically reclaims a replaceable instance having the instance specification. When scheduling, to the first tenant, the resource obtained by reclaiming the replaceable instance, the resource scheduling module 1011 may schedule, to the fourth tenant, an instance having another specification in the network, to replace the replaceable instance of the fourth tenant. In this way, a resource of a service of the fourth tenant is adjusted from having the instance specification to the instance having the another specification, and the first tenant may meet a service requirement of the first tenant by using the resource that is obtained by reclaiming the replaceable instance and that is allocated to the first tenant. During actual application, based on a policy that the replaceable instance may be reclaimed and replaced in a use process, a price at which the fourth tenant purchases the replaceable instance may be compensated in a commercial incentive manner. For example, the fourth tenant may purchase the replaceable instance at a low price, to be specific, the price paid by the fourth tenant for purchasing the replaceable instance may be lower than a price paid by the fourth tenant for purchasing a non-replaceable instance. The non-replaceable instance and the replaceable instance have a same specification. However, the non-replaceable instance is not allowed to be replaced during running.

Alternatively, the resource scheduling module 1011 may reclaim, based on the resource allocation request sent by the first tenant, a migratable instance used by a fifth tenant in a resource running time period. The migratable instance is an instance that is confirmed by the fifth tenant in advance to be allowed to be migrated to another region during running, so that a service of the fifth tenant implemented by the migratable instance may be implemented by a resource in the another region. Correspondingly, a resource obtained by reclaiming the migratable instance may be scheduled by the resource scheduling module 1011 to the first tenant, to increase the resource allocated to the first tenant. During specific implementation, the resource allocation request sent by the first tenant may carry an identifier of a target region to which the instance belongs. In this case, when reclaiming the migratable instance of the fifth tenant, the resource scheduling module 1011 specifically reclaims a migratable instance that belongs to the target region. When scheduling, to the first tenant, the resource obtained by reclaiming the migratable instance, the resource scheduling module 1011 may schedule an instance in another network to the fifth tenant, so that the migratable instance of the fifth tenant is migrated to the another region. In this way, the first tenant may meet the service requirement of the first tenant by using a resource obtained by reclaiming the migratable instance and allocated to the first tenant. During actual application, based on a policy that the migratable instance may be reclaimed and migrated in a use process, a price at which the fifth tenant purchases the migratable instance may be compensated in the commercial incentive manner. For example, the fifth tenant may purchase the migratable instance at a low price, to be specific, the price paid by the fifth tenant for purchasing the migratable instance may be lower than a price paid by the fifth tenant for purchasing a non-migratable instance. The non-migratable instance and the migratable instance belong to a same region. However, the non-migratable instance is not allowed to be migrated to the another region during running.

Implementation 2: When rescheduling the elastic resource of the second tenant to the first tenant, the resource scheduling apparatus 101 (which may be specifically the resource scheduling module 1011) may further schedule a resource from another region and allocate the resource to the first tenant. During specific implementation, the resource allocation request received by the resource scheduling apparatus 101 may include identifiers of a first region and a second region in the cloud infrastructure. A priority of allocating a resource in the first region to the first tenant is higher than a priority of allocating a resource in the second region to the first tenant. In other words, the resource scheduling apparatus may preferentially search the first region for a resource that can be scheduled. After the resource scheduling apparatus 101 allocates the resource to the first tenant from the second elastic resource of the second tenant, when the quantity of the resources allocated to the first tenant is still less than the quantity of the resources requested by the resource allocation request, the resource scheduling apparatus 101 may search the second region for a resource, and allocate the resource to the first tenant, as shown in FIG. 3. The resource found by the resource scheduling apparatus 101 from the second region may be, for example, an elastic resource of another tenant that belongs to the second region.

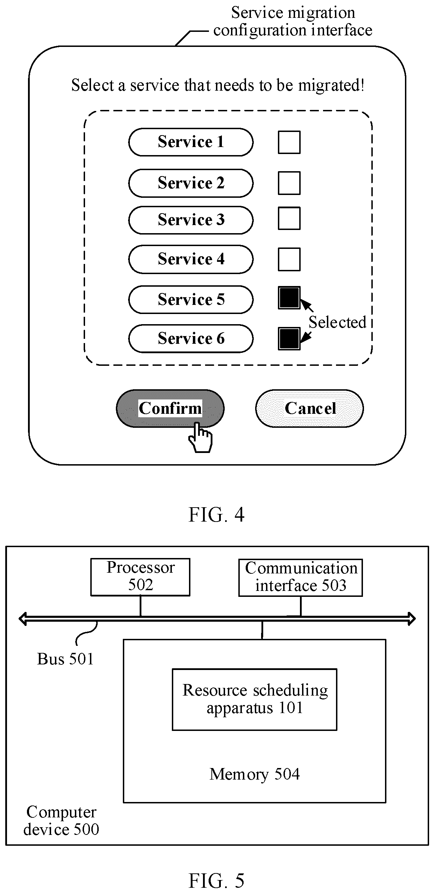

During actual application, the resource that is allocated to the first tenant and that belongs to the second region may be used to implement a part of a service of the first tenant. In addition, efficiency of executing the service of the first tenant by using resources that belong to different regions may be different. For example, efficiency of implementing the service by using the resource that belongs to the second region may be lower than efficiency of implementing the service by using the resource that belongs to the first region. Therefore, in a further possible implementation, the first tenant may specify that the part of the service is implemented by using the resource that belongs to the second region. During specific implementation, the resource scheduling apparatus 101 may present a service configuration interface. For example, the service configuration interface may be an interface shown in FIG. 4. In addition, a plurality of services that belong to the first tenant are displayed on the service configuration interface, so that the first tenant may deploy the service on the interface, and specifically, may deploy a resource used for implementing each service. Correspondingly, the resource scheduling apparatus 101 may determine a target service in the plurality of services in response to a selection operation performed by the first tenant. The target service may have a corresponding label, and is used to distinguish from another service implemented by using the resource that belongs to the first region, so that the target service is implemented by using the resource in the second region, and the remaining service may be implemented by using the resource in the first region. In this way, a resource can be scheduled and allocated to the tenant in the entire domain. During actual application, a high latency or low efficiency of implementing the service by using the resource in the second region may be compensated for in a commercial incentive manner.

However, in another possible implementation, a service of the first tenant implemented by the resource in the second region is determined by the resource scheduling apparatus 101. For example, the first tenant may preset a rule of deploying the service. The rule of deploying the service defines a resource applicable to each service of the first tenant, so that the resource scheduling apparatus 101 may determine, based on the rule of deploying the service, which services in the plurality of services of the first tenant are implemented by the resource that belongs to the first region and which services are implemented by a resource that belongs to a third region. During actual application, the resource scheduling apparatus 101 may determine, based on the rule of deploying the service, a target service that is in a plurality of services of the first tenant and that is implemented by using the resource in the third region, and the remaining service may be implemented by using the resource in the first region.

In still another possible implementation, the resource allocation request sent by the first tenant may include the identifiers of the first region and the second region, to indicate to request, from the resource scheduling apparatus 101, the resource that belongs to the first region or the second region. When both a total quantity of available resources in the first region and a total quantity of available resources in the second region are insufficient to meet the resource requirement of the first tenant, the resource scheduling apparatus 101 may present a resource allocation prompt interface to the first tenant. The resource in the third region may be displayed in the resource allocation prompt interface, so that the first tenant determines whether to allow allocating the resource that belongs to the third region to the first tenant. When the first tenant determines that the resource scheduling apparatus 101 is allowed to allocate the resource in the third region to the first tenant, the resource scheduling apparatus may respond to a resource allocation confirmation operation of the first tenant for the third region, and schedule the resource in the third region to the first tenant, so that the first tenant implements the service of the first tenant by using the resource in the third region.

For example, the target service may be, for example, a spot service, a service that can be temporarily interrupted (for example, an offline computing service), a service that is allowed to be implemented by using a resource in another region, and a service in which a resource specification is allowed to be replaced (for example, the resource specification for implementing the service is replaced from 32 cores and 64 GB to 16 cores and 32 GB).

It should be noted that the foregoing implementations are merely used as an implementation example. During actual application, more resources may be allocated to the first tenant in another manner. Alternatively, the foregoing implementations may be combined, so that the resource allocated to the first tenant can meet the service requirement of the first tenant.

In an example, based on the foregoing implementations, the resource scheduling apparatus 101 may allocate the resource to the first tenant by using the following four resource allocation policies.

Policy 1: When an elastic resource reserved for the first tenant in a resource pool 201 is insufficient to meet the resource requirement of the first tenant, the resource scheduling module 1011 may not only allocate, to the first tenant, the elastic resource reserved for the first tenant in the resource pool 201, but also reschedule, to the first tenant, an elastic resource reserved for the second tenant in the resource pool 201.

Policy 2: The resource scheduling apparatus 101 may not only allocate, to the first tenant, the elastic resource reserved for the first tenant and the elastic resource reserved for the second tenant in the resource pool 201, but also reclaim the resource (such as the spot instance) used by the third tenant in the resource running time period, or the replaceable instance used by the fourth tenant in the resource running time period, or the migratable instance used by the fifth tenant in the resource running time period, and allocate the reclaimed resource to the first tenant.

Policy 3: The resource scheduling apparatus 101 allocates, to the first tenant, elastic resources reserved for the first tenant and the second tenant in the resource pool 201, reclaims instances of the third tenant, the fourth tenant, and the fifth tenant, and allocates the reclaimed resources to the first tenant, and schedules a resource from another region and allocates the resource to the first tenant.

Policy 4: Based on execution of the policy 3, a resource insufficiency alarm is further triggered, to prompt, by using the alarm, a resource maintenance engineer to provide a new resource, for example, to deploy more hardware resources in the network to implement capacity expansion of the resource pool 201. During actual application, because the resource scheduling apparatus 101 needs specific duration to reclaim a resource, for example, the resource scheduling apparatus 101 may reclaim six virtual machines per second, when resources of 12000 virtual machines need to be reclaimed, the resource scheduling apparatus 101 needs 2000 seconds to reclaim the resources. Therefore, before requesting the elastic resource, the first tenant may further notify the resource scheduling apparatus 101 to prepare the corresponding elastic resource in advance, and specifically notify the resource scheduling apparatus 101 of the resource quantity of the elastic resources required by the first tenant and the resource running time period of the required resource. In this way, the resource scheduling apparatus 101 may trigger, based on the resource quantity of the resources required by the first tenant and the resource running time period, processes such as resource reclaiming and resource scheduling in a region in advance, to prepare sufficient resources in advance to meet a requirement of the first tenant on the elastic resource in the resource running time period, so as to effectively ensure resource supply of the resource scheduling apparatus 101 for the first tenant.

It should be noted that the foregoing four policies are merely used as examples for description. During actual application, a response policy used by the resource scheduling apparatus 101 may alternatively be another policy. This is not limited in this embodiment.

In a possible implementation, the resource scheduling apparatus 101 may determine, based on a rate of satisfying, by a resource in the resource pool 201, service requirements of a plurality of tenants accessing the resource scheduling system 100, the resource scheduling apparatus 101. A higher rate of satisfying indicates a higher degree of meeting the service requirements of the plurality of tenants by the reserved resource in the representation resource pool 201. On the contrary, a lower rate of satisfying indicates a lower degree of meeting the service requirements of the plurality of tenants by the reserved resource in the representation resource pool 201.

In this embodiment, the resource scheduling apparatus 101 may further include an elastic requirement management module 1013 and an elastic requirement evaluation module 1014. The elastic requirement management module 1013 may collect a resource quantity of elastic resources that each tenant requests the resource scheduling apparatus 101 to reserve for the tenant. The elastic requirement evaluation module 1014 may record a resource quantity of elastic resources required by each tenant, and obtain, by using the data platform 102, a quantity of the resources in the resource pool 201 in real time, to determine whether the resource in the resource pool 201 can meet an elastic resource required by a plurality of tenants. Then, the elasticity requirement evaluation module 1014 may collect statistics on duration in which the resource in the resource pool 201 meets the elastic resource required by the plurality of tenants in a preset time period, so that a ratio of the duration to duration of the preset time period may be used as the rate of satisfying, by the resource in the resource pool 201, the service requirements of the plurality of tenants accessing the resource scheduling system 100.

In this way, the resource scheduling apparatus 101 may determine, based on the rate of satisfying calculated by the elastic requirement evaluation module 1014, which policy is used to allocate a new resource to the first tenant. For example, when the rate of satisfying is 100%, the resource scheduling module 1011 may use Policy 1 to allocate the new resource to the first tenant. When the rate of satisfying is [80%, 100%), the resource scheduling apparatus 101 may use Policy 2 to allocate the new resource to the first tenant. When the rate of satisfying is [50%, 80%), the resource scheduling apparatus 101 may use Policy 3 to allocate the new resource to the first tenant. When the rate of satisfying is less than 50%, the resource scheduling apparatus 101 may allocate the new resource to the first tenant by using Policy 4. It is clear that when the elastic resource reserved in the resource pool 201 for the first tenant can meet a requirement that the first tenant requests the newly allocated resource, the resource scheduling apparatus 101 may directly allocate the reserved elastic resource to the first tenant.

In the foregoing implementation, the resource scheduling apparatus 101 may directly allocate the resource to the first tenant. In another possible implementation, before allocating the resource, the resource scheduling apparatus 101 may further present a resource scheduling interface to the first tenant. The resource scheduling interface displays a candidate resource that can be allocated to the first tenant. The candidate resource may be, for example, the elastic resource of the foregoing second tenant, the resource obtained by reclaiming the deletable instance of the third tenant, the resource obtained by reclaiming the replaceable instance of the fourth tenant, or the resource obtained by reclaiming the migratable instance of the fifth tenant. In this way, the first tenant may check, on the resource scheduling interface, whether the candidate resource to be allocated to the first tenant meets an expectation of the first tenant. For example, the first tenant may check whether a resource combination (for example, the quantity of the processor cores and the quantity of the memories) in the candidate resource meets the expectation of the first tenant. During actual application, the resource scheduling apparatus 101 may present candidate resources of a plurality of different resource combinations, and may further present related information between different candidate resources, for example, information such as a cost, a deployment range, and an average latency of each candidate resource, for the first tenant to select. Then, the resource scheduling apparatus 101 may allocate, to the first tenant, based on a selection operation performed by the first tenant for the candidate resource, the candidate resource selected by the first tenant, to implement secondary scheduling of the newly increased resource by the first tenant.

During actual application, when the first tenant signs the SLA, the resource scheduling apparatus 101 may calculate, based on any one or more of elastic resources, deletable instances, replaceable instances, and migratable instances of tenants of the cloud infrastructure, a quantity of reserved resources that can be provided. In this way, when a quantity of resources that the first resource reservation request sent by the first tenant request to reserve is greater than the calculated quantity of the reserved resources that can be provided, the resource scheduling apparatus 101 may reject the first resource reservation request, to be specific, refuse to reserve the first elastic resource for the first tenant in the cloud infrastructure based on the first resource reservation request.

Further, when the quantity of the resources that the first resource reservation request sent by the first tenant request to reserve is greater than the quantity of the calculated reserved resources that can be provided, the resource scheduling apparatus 101 may notify the first tenant of the quantity of the reserved resources that can be provided, and receive another resource reservation request sent by the first tenant based on the quantity of the reserved resources, to reserve the first elastic resource for the first tenant based on the quantity of the reserved resources.

In the foregoing embodiments, the resource scheduling apparatus 101 involved in the resource scheduling process may be implemented by a separate hardware device. In another possible implementation, the resource scheduling apparatus 101 may also be software configured on a computer device. In addition, by running the software on the computer device, the computer device may separately implement functions of the foregoing resource scheduling apparatus 101. The following separately describes in detail the resource scheduling apparatus 101 involved in the resource scheduling process from a perspective of implementation of the hardware device.

FIG. 5 shows a computer device. The computer device 500 shown in FIG. 5 may be specifically configured to implement functions of the resource scheduling apparatus 101 in embodiments shown in the foregoing FIG. 2 and FIG. 3.

The computer device 500 includes a bus 501, a processor 502, a communication interface 503, and a memory 504. The processor 502, the memory 504, and the communication interface 503 communicate with each other by using the bus 501. The bus 501 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 5, but this does not mean that there is only one bus or only one type of bus. The communication interface 503 is configured to communicate with the outside, for example, to receive a data-obtaining request sent by a terminal.

The processor 502 may be a central processing unit (central processing unit, CPU). The memory 504 may include a volatile memory (volatile memory), for example, a random access memory (random access memory, RAM). The memory 504 may further include a non-volatile memory (non-volatile memory), for example, a read-only memory (read-only memory, ROM), a flash memory, an HDD, or an SSD.

The memory 504 stores executable code, and the processor 502 executes the executable code to perform the method performed by the foregoing resource scheduling apparatus 101.

Specifically, when embodiments shown in FIG. 2 and FIG. 3 are implemented, and the resource scheduling apparatus 101 described in embodiments shown in FIG. 2 and FIG. 3 is implemented by using software, software or program code required for performing the functions of the resource scheduling apparatus 101 in FIG. 2 and FIG. 3 is stored in the memory 504. Interaction between the resource scheduling apparatus 101 and another device is implemented by using the communication interface 503. The processor is configured to execute instructions in the memory 504, to implement the method performed by the resource scheduling apparatus 101.

In addition, an embodiment of this application further provides a computer-readable storage medium. The computer-readable storage medium stores instructions. When the instructions are run on a computer device, the computer device performs the method performed by the resource scheduling apparatus 101 in the foregoing embodiments.

In addition, an embodiment of this application further provides a computer program product. When the computer program product is executed by a computer, the computer performs any one of the foregoing data providing methods. The computer program product may be a software installation package. When any one of the foregoing data providing methods needs to be used, the computer program product may be downloaded and executed on the computer.

In addition, it should be noted that the apparatus embodiments described above are merely an example. The units described as separate parts may or may not be physically separate, and parts displayed as units may or may not be physical units, may be located in one position, or may be distributed on a plurality of network units. A part or all of the modules may be selected based on an actual requirement to achieve the objectives of the solutions in embodiments. In addition, in the accompanying drawings of the apparatus embodiments provided in this application, a connection relationship between the modules indicates that there is a communication connection between the modules, and may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, all functions implemented by a computer program may be easily implemented by using corresponding hardware. In addition, specific hardware structures used to implement a same function may also be various, for example, an analog circuit, a digital circuit, or a dedicated circuit. However, for this application, software program implementation is a better implementation in more cases. Based on such an understanding, the technical solutions of this application essentially, or the part contributing to a current technology may be implemented in a form of a software product. The computer software product is stored in a readable storage medium, for example, a floppy disk, a USB flash drive, a removable hard drive, an ROM, a RAM, a magnetic disk, or an optical disc on a computer, and includes several instructions for instructing a computer device (may be a personal computer, a training device, or a network device) to perform the method described in embodiments of this application.

All or a part of the foregoing embodiments may be implemented by using software, hardware, firmware, or any combination thereof. When software is used to implement embodiments, all or a part of embodiments may be implemented in a form of a computer program product.

The computer program product includes one or more computer instructions. When the computer instructions are loaded and executed on a computer, all or a part of the procedures or functions according to embodiments of this application are generated. The computer may be a general purpose computer, a dedicated computer, a computer network, or another programmable apparatus. The computer instruction may be stored in a computer-readable storage medium or may be transmitted from a computer-readable storage medium to another computer-readable storage medium. For example, the computer instruction may be transmitted from a website, computer, training device, or data center to another website, computer, training device, or data center in a wired (for example, using a coaxial cable, an optical fiber, or a digital subscriber line (DSL)) or wireless (for example, via infrared, radio, or microwaves) manner. The computer-readable storage medium may be any usable medium accessible by the computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

## Claims

1. A resource scheduling method, wherein the method comprises:
receiving a first resource reservation request, and reserving a first elastic resource for a first tenant in a cloud infrastructure based on the first resource reservation request;
receiving a second resource reservation request, and reserving a second elastic resource for a second tenant in the cloud infrastructure based on the second resource reservation request;
receiving a resource allocation request, wherein the resource allocation request requests to allocate a resource to the first tenant in the cloud infrastructure; and
determining that a quantity of resources requested by the resource allocation request is greater than a quantity of first elastic resources, and allocating a resource to the first tenant from the second elastic resource.

2. The method according to claim 1, wherein the resource allocation request comprises a resource running time period;
the allocating a resource to the first tenant from the second elastic resource comprises:
allocating a resource to the first tenant from a part that is of the second elastic resource and that is not required by the second tenant in the resource running time period; and
the method further comprises:
after the resource running time period ends, releasing the resource allocated to the first tenant from the second elastic resource back to the second elastic resource.

3. The method according to claim 1 or 2, wherein the method further comprises:
reclaiming a deletable instance used by a third tenant, wherein the third tenant has confirmed that the deletable instance is allowed to be reclaimed during running; and
scheduling, to the first tenant, a resource obtained by reclaiming the deletable instance.

4. The method according to any one of claims 1 to 3, wherein the resource allocation request comprises an instance specification, and the method further comprises:
reclaiming a replaceable instance used by a fourth tenant, wherein a specification of the replaceable instance is the instance specification, and the fourth tenant has confirmed that the replaceable instance is allowed to be replaced during running;
scheduling, to the first tenant, a resource obtained by reclaiming the replaceable instance;
and
allocating an instance of another specification to the fourth tenant to replace the replaceable instance.

5. The method according to claim 4, wherein a price at which the fourth tenant purchases the replaceable instance is lower than a price at which the fourth tenant purchases a non-replaceable instance, wherein the non-replaceable instance and the replaceable instance have a same specification, but the non-replaceable instance is not allowed to be replaced during running.

6. The method according to any one of claims 1 to 5, wherein the resource allocation request comprises an identifier of a target region of the cloud infrastructure, and the method further comprises:
reclaiming a migratable instance used by a fifth tenant, wherein the migratable instance belongs to the target region, and the fifth tenant has confirmed that the migratable instance is allowed to be migrated during running;
scheduling, to the first tenant, a resource obtained by reclaiming the migratable instance; and
migrating the migratable instance of the fifth tenant to another region.

7. The method according to claim 6, wherein a price at which the fifth tenant purchases the migratable instance is lower than a price at which the fifth tenant purchases a non-migratable instance, wherein the non-migratable instance and the migratable instance belong to a same region, but the non-migratable instance is not allowed to be migrated during running.

8. The method according to any one of claims 1 to 7, wherein the resource allocation request comprises identifiers of a first region and a second region in the cloud infrastructure, a priority of allocating a resource in the first region to the first tenant is higher than a priority of allocating a resource in the second region to the first tenant, and the method comprises:
determining that a quantity of resources that are in the first region and that can be allocated to the first tenant is less than the quantity of the resources requested by the resource allocation request, and allocating the resource in the second region to the first tenant.

9. The method according to claim 8, wherein the method further comprises:
implementing different services of the first tenant based on resource configuration of the first tenant for a service and by using the resource in the first region in the cloud infrastructure and the resource in the second region in the cloud infrastructure.

10. The method according to claim 8 or 9, wherein the method further comprises:
presenting a resource allocation prompt interface, wherein the resource allocation prompt interface displays a resource in a third region in the cloud infrastructure; and
in response to a resource allocation confirmation operation of the first tenant for the third region, scheduling the resource in the third region to the first tenant.

11. The method according to claim 2, wherein the method further comprises:
predicting a part that is of the second elastic resource and that is not required by the second tenant in the resource running time period.

12. The method according to any one of claims 1 to 11, wherein the first resource reservation request comprises a resource reservation quantity; and
the reserving a first elastic resource for a first tenant in a cloud infrastructure based on the first resource reservation request comprises:
determining the quantity of the first elastic resources based on a historical resource utilization status of the first tenant and/or a historical resource utilization status of another tenant of the cloud infrastructure, wherein the quantity of the first elastic resources is less than the resource reservation quantity.

13. The method according to any one of claims 1 to 12, wherein the method further comprises:
before the resource is allocated to the first tenant, presenting a resource scheduling interface to the first tenant, wherein the resource scheduling interface displays a candidate resource that can be allocated to the first tenant, and the candidate resource does not meet a requirement of the resource allocation request; and
selecting, based on a selection operation performed by the first tenant on the candidate resource, a part of the candidate resource to allocate the part of the candidate resource to the first tenant.

14. The method according to any one of claims 1 to 13, wherein the resource allocation request comprises a plurality of instance specifications.

15. The method according to any one of claims 1 to 14, wherein the method further comprises:
calculating, based on any one or more of elastic resources, deletable instances, replaceable instances, and migratable instances of tenants of the cloud infrastructure, a quantity of reserved resources that can be provided; and
rejecting the first resource reservation request when a quantity of resources that the first resource reservation request requests to reserve is greater than the quantity of the reserved resources that can be provided.

16. A resource scheduling apparatus, wherein the resource scheduling apparatus comprises:
a communication module, configured to receive a first resource reservation request, a second resource reservation request, and a resource allocation request, wherein the resource allocation request requests to allocate a resource to a first tenant in a cloud infrastructure; and
a resource scheduling module, configured to reserve a first elastic resource for the first tenant in the cloud infrastructure based on the first resource reservation request, reserve a second elastic resource for a second tenant in the cloud infrastructure based on the second resource reservation request, determine that a quantity of the resources requested by the resource allocation request is greater than a quantity of first elastic resources, and allocate a resource to the first tenant from the second elastic resource.

17. The resource scheduling apparatus according to claim 16, wherein the resource allocation request comprises a resource running time period, and the resource scheduling module is configured to allocate a resource to the first tenant from a part that is of the second elastic resource and that is not required by the second tenant in the resource running time period, and after the resource running time period ends, release the resource allocated to the first tenant from the second elastic resource back to the second elastic resource.

18. The resource scheduling apparatus according to claim 16 or 17, wherein the resource scheduling apparatus further comprises:
a reclaiming module, configured to reclaim a deletable instance used by a third tenant, wherein the third tenant has confirmed that the deletable instance is allowed to be reclaimed during running, wherein
the resource scheduling module is further configured to schedule, to the first tenant, a resource obtained by reclaiming the deletable instance.

19. The resource scheduling apparatus according to any one of claims 16 to 18, wherein the resource allocation request comprises an instance specification, and the resource scheduling apparatus further comprises:
the reclaiming module, configured to reclaim a replaceable instance used by a fourth tenant, wherein a specification of the replaceable instance is the instance specification, and the fourth tenant has confirmed that the replaceable instance is allowed to be replaced during running, wherein
the resource scheduling module is further configured to schedule, to the first tenant, a resource obtained by reclaiming the replaceable instance, and allocate an instance of another specification to the fourth tenant to replace the replaceable instance.

20. The resource scheduling apparatus according to claim 19, wherein a price at which the fourth tenant purchases the replaceable instance is lower than a price at which the fourth tenant purchases a non-replaceable instance, wherein the non-replaceable instance and the replaceable instance have a same specification, but the non-replaceable instance is not allowed to be replaced during running.

21. The resource scheduling apparatus according to any one of claims 16 to 20, wherein the resource allocation request comprises an identifier of a target region of the cloud infrastructure, and the resource scheduling apparatus further comprises:
the reclaiming module, configured to reclaim a migratable instance used by a fifth tenant, wherein the migratable instance belongs to the target region, and the fifth tenant has confirmed that the migratable instance is allowed to be migrated during running, wherein
the resource scheduling module is further configured to schedule, to the first tenant, a resource obtained by reclaiming the migratable instance, and migrate the migratable instance of the fifth tenant to another region.

22. The resource scheduling apparatus according to claim 21, wherein a price at which the fifth tenant purchases the migratable instance is lower than a price at which the fifth tenant purchases a non-migratable instance, wherein the non-migratable instance and the migratable instance belong to a same region, but the non-migratable instance is not allowed to be migrated during running.

23. The resource scheduling apparatus according to any one of claims 16 to 22, wherein the resource allocation request comprises identifiers of a first region and a second region in the cloud infrastructure, and a priority of allocating a resource in the first region to the first tenant is higher than a priority of allocating a resource in the second region to the first tenant; and
the resource scheduling module is further configured to determine that a quantity of resources that are in the first region and that can be allocated to the first tenant is less than the quantity of the resources requested by the resource allocation request, and allocate the resource in the second region to the first tenant.

24. The resource scheduling apparatus according to claim 23, wherein the resource scheduling module is further configured to implement different services of the first tenant based on resource configuration of the first tenant for a service and by using the resource in the first region in the cloud infrastructure and the resource in the second region in the cloud infrastructure.

25. The resource scheduling apparatus according to claim 23 or 24, wherein the resource scheduling module is further configured to present a resource allocation prompt interface, wherein the resource allocation prompt interface displays a resource in a third region in the cloud infrastructure; and in response to a resource allocation confirmation operation of the first tenant for the third region, schedule the resource in the third region to the first tenant.

26. The resource scheduling apparatus according to claim 17, wherein the resource scheduling module is further configured to predict a part that is of the second elastic resource and that is not required by the second tenant in the resource running time period.

27. The resource scheduling apparatus according to any one of claims 16 to 26, wherein the first resource reservation request comprises a resource reservation quantity; and
the resource scheduling module is configured to determine the quantity of the first elastic resources based on a historical resource utilization status of the first tenant and/or a historical resource utilization status of another tenant of the cloud infrastructure, wherein the quantity of the first elastic resources is less than the resource reservation quantity.

28. The resource scheduling apparatus according to any one of claims 16 to 27, wherein the resource scheduling module is further configured to: before allocating the resource to the first tenant, present a resource scheduling interface to the first tenant, wherein the resource scheduling interface displays a candidate resource that can be allocated to the first tenant, and the candidate resource does not meet a requirement of the resource allocation request; and select, based on a selection operation performed by the first tenant on the candidate resource, a part of the candidate resource to allocate the part of the candidate resource to the first tenant.

29. The resource scheduling apparatus according to any one of claims 16 to 28, wherein the resource allocation request comprises a plurality of instance specifications.

30. The resource scheduling apparatus according to any one of claims 16 to 29, wherein the resource scheduling module is further configured to calculate, based on any one or more of elastic resources, deletable instances, replaceable instances, and migratable instances of tenants of the cloud infrastructure, a quantity of reserved resources that can be provided; and reject the first resource reservation request when a quantity of resources that the first resource reservation request requests to reserve is greater than the quantity of the reserved resources that can be provided.

31. A computer device, wherein the computer device comprises a processor and a memory; and
the processor is configured to execute instructions stored in the memory, to enable the computer device to perform the method according to any one of claims 1 to 15.

32. A resource scheduling system, wherein the resource scheduling system comprises the resource scheduling apparatus and the cloud infrastructure according to any one of claims 16 to 30, the cloud infrastructure device comprises one or more computers, and the one or more computers are configured to run a service for a tenant in the cloud infrastructure.

33. A computer-readable storage medium, wherein the computer-readable storage medium stores instructions, and when the instructions are run on a computing device, the computing device is enabled to perform the method according to any one of claims 1 to 15.
